# EUROPEAN PATENT APPLICATION

(11) **EP 4 254 638 A1**
(43) Date of publication of application: **04.10.2023**
(21) Application number: 23163705.9
(22) Date of filing: 23.03.2023
(51) Int. Cl.: H01M 50/474, H01M 50/48, C09J 7/29

(54) **BINDING PIECE FOR ELECTROCHEMICAL APPARATUS, ELECTROCHEMICAL APPARATUS, AND ELECTRONIC APPARATUS**

(30) Priority: 28.03.2022 CN 202210309303
(71) Applicant: Ningde Amperex Technology Ltd., Ningde City, Fujian 352100 (CN)
(72) Inventor: ZHANG, Yuanjie, Ningde City, Fujian Province, People s Republic of China, 352100 (CN)
(74) Representative: Icosa

(57) **Abstract**

A binding piece includes an insulation layer, a substrate layer, and at least one binding layer stacked together; where one of the at least one binding layer forms on an outer surface of the binding piece; where 10% ≤ L₂ ≤100%, 1.2 ≤ L₁/L₂ ≤ 20, L₁ is an elongation rate of the insulation layer, and L₂ is an elongation rate of the substrate layer.

## Description

### TECHNICAL FIELD

This application relates to the field of electrochemical technologies, and in particular, to a binding piece for electrochemical apparatus, an electrochemical apparatus, and an electronic apparatus.

### BACKGROUND

Lithium-ion batteries have advantages such as high energy storage density, high open-circuit voltage, low self-discharge rate, long cycle life, and high safety, and therefore are widely used in the fields such as portable electrical energy storage, electronic devices, and electric vehicles. During rapid development of lithium-ion batteries, higher requirements are imposed on comprehensive performance of the lithium-ion batteries.

In actual use of a lithium-ion battery, there are special scenes such as external force extrusion and foreign body puncture, which lead to damage to the structure of the lithium-ion battery itself, and lead to serious local short circuit or heating of the lithium-ion battery, and then lead to thermal runaway, even fire and failure, affecting safety performance of the lithium-ion battery. Therefore, how safety performance of the lithium-ion batteries is improved is a problem that needs to be urgently resolved.

### SUMMARY

This application is intended to provide a binding piece for electrochemical apparatus, an electrochemical apparatus, and an electronic apparatus, so as to improve safety performance of electrochemical apparatuses.

A first aspect of this application provides a binding piece for electrochemical apparatus, where the binding piece includes an insulation layer, a substrate layer, and at least one binding layer stacked together, where one of the at least one binding layer forms on an outer surface of the binding piece, 10% ≤ L₂ ≤100%, 1.2 ≤ L₁/L₂ ≤ 20, L₁ is an elongation rate of the insulation layer, and L₂ is an elongation rate of the substrate layer. The elongation rate L₁ of the insulation layer and the elongation rate L₂ of the substrate layer being controlled to satisfy the foregoing ranges and relationship can improve the safety performance of the electrochemical apparatus.

In some embodiments of this application, a tensile strength of the insulation layer is 5 MPa to 100 MPa. The tensile strength of the insulation layer is controlled within the foregoing range, such that the insulation layer is not prone to breakage in resisting external force when exerting its advantage of elongation rate, thereby helping to improve the safety performance of the electrochemical apparatus.

In some embodiments of this application, 0.5 µm ≤ T ≤ 50 µm, and T is a thickness of the insulation layer. The thickness of the insulation layer being controlled within the foregoing range improves the safety performance of the electrochemical apparatus almost without affecting energy density of the electrochemical apparatus.

In some embodiments of this application, the insulation layer satisfies one of the following characteristics: (i) that the insulation layer includes inorganic insulation particles and a binder, where the inorganic insulation particles include at least one of aluminum oxide, titanium dioxide, magnesium oxide, zirconium oxide, or zinc oxide, and the binder includes at least one of polyvinylidene fluoride, polyacrylate salt, polyacrylic acid, polyacrylate ester, polymethyl methacrylate, polyacrylonitrile, polyamide, or sodium carboxymethyl cellulose; (ii) that the insulation layer includes a polymer, where the polymer includes at least one of polypropylene, polyethylene, polyethylene terephthalate, polyvinyl chloride, polyamide, polystyrene, natural rubber, cis-butadiene rubber, neoprene, styrene-butadiene rubber, nitrile rubber, silicone rubber, isoprene rubber, or ethylene-propylene rubber; and (iii) that the insulation layer is a non-woven fabric, where the non-woven fabric is made of at least one of polyethylene, polypropylene, polytetrafluoroethylene, polyethylene terephthalate, cellulose, polyimide, or polyamide. The insulation layer satisfying one of the foregoing characteristics helps to improve the safety performance of the electrochemical apparatus.

In some embodiments of this application, tensile strength of the substrate layer is 200 MPa to 1500 MPa, and 12% ≤ L₁ ≤ 200%. The tensile strength of the substrate layer and the elongation rate L₁ of the insulation layer being controlled within the foregoing ranges helps to improve the safety performance of the electrochemical apparatus.

In some embodiments of this application, a thickness of the substrate layer is 1 µm to 50 µm. The thickness of the substrate layer being controlled within the foregoing range improves the safety performance of the electrochemical apparatus almost without affecting energy density of the electrochemical apparatus.

In some embodiments of this application, the substrate layer is made of at least one of gold, gold alloy, silver, silver alloy, platinum, platinum alloy, copper, copper alloy, magnesium, magnesium alloy, aluminum, aluminum alloy, titanium alloy, nickel, nickel alloy, stainless steel, or another iron alloy. Selection of the substrate layer made of the foregoing material helps to obtain a binding piece having good mechanical performance, thereby improving the safety performance of the electrochemical apparatus.

In some embodiments of this application, 50 N/m ≤ C ≤ 1000 N/m, C is a peel strength of the one of the at least one binding layer, and a thickness of the one of the at least one binding layer is 0.5 µm to 50 µm. The peel strength C and the thickness of the one of the at least one binding layer being controlled within the foregoing ranges improves the safety performance of the electrochemical apparatus almost without affecting energy density of the electrochemical apparatus.

In some embodiments of this application, the at least one binding layer includes at least one of an acrylic compound, an acrylic ester compound, a phosphate ester compound, a polyurethane compound, rosin resin, terpene resin, phenolic resin, petroleum resin, an epoxy resin compound, a vinyl acetate compound, a polyvinyl acetal compound, a polyamide compound, vulcanized silicone rubber, furan resin, a formaldehyde resin compound, a polyimide compound, or urea formaldehyde resin. This helps to obtain the at least one binding layer with a great peel strength, thereby improving the safety performance of the electrochemical apparatus.

In some embodiments of this application, the insulation layer is disposed between the substrate layer and the at least one binding layer. This can alleviate impact of burrs or fins caused by damage of external force to the substrate layer on the internal structure of the electrochemical apparatus, and exert the advantage of high elongation rate of the insulation layer to resist external force, thereby helping to improve the safety performance of the electrochemical apparatus.

In some embodiments of this application, the insulation layer includes a first insulation layer and a second insulation layer; and the one of the at least one binding layer, the first insulation layer, the substrate layer, and the second insulation layer are sequentially stacked. The first insulation layer and the second insulation layer cover the substrate layer from two sides of the substrate layer in the thickness direction of the substrate layer. This can better alleviate impact of burrs or fins caused by damage of external force to the substrate layer on the internal structure of the electrochemical apparatus, thereby improving the safety performance of the electrochemical apparatus.

In some embodiments of this application, the at least one binding layer includes a first binding layer and a second binding layer; and the first binding layer, the first insulation layer, the substrate layer, the second insulation layer, and the second binding layer are sequentially stacked. This can increase the peel strength of the binding piece, thereby helping to improve the safety performance of the electrochemical apparatus.

In some embodiments of this application, the at least one binding layer further includes a third binding layer disposed between the substrate layer and the first insulation layer, and a fourth binding layer disposed between the substrate layer and the second insulation layer. This can not only increase stability of the internal structure of the binding piece and the electrochemical apparatus, but also increase the overall strength of the binding piece, thereby helping to improve the safety performance of the electrochemical apparatus.

A second aspect of this application provides an electrochemical apparatus. The electrochemical apparatus includes an electrode assembly, a packaging bag, and the binding piece according to any one of the foregoing embodiments. The electrochemical apparatus provided in this application has good safety performance.

In some embodiments of this application, the electrode assembly is disposed in the packaging bag, the binding piece is disposed between the electrode assembly and the packaging bag, and the one of the at least one binding layer is adhered to an outer surface of the electrode assembly. In this way, the resulting electrochemical apparatus has good safety performance.

In some embodiments of this application, the electrode assembly is of a winding structure, the electrode assembly includes a tab; in a thickness direction of the electrode assembly, the electrode assembly includes a first surface and a second surface, a distance from the tab to the first surface is H₁, and a distance from the tab to the second surface is H₂, where H₁/H₂ > 1, and the one of the at least one binding layer is adhered to the first surface. The resulting electrochemical apparatus has high extrusion-resistant mechanical strength, thereby helping to improve the safety performance of the electrochemical apparatus.

In some embodiments of this application, the electrode assembly includes a tab and an electrode plate, the electrode plate includes a connection region, the tab is connected to the electrode plate at the connection region, the one of the at least one binding layer is adhered onto the connection region, and an orthographic projection of the binding piece and an orthographic projection of the connection region at least partially overlap in the thickness direction of the electrode assembly. This helps to improve the safety performance of the electrochemical apparatus.

A third aspect of this application provides an electronic apparatus, including the electrochemical apparatus according to any one of the foregoing embodiments.

This application provides a binding piece for electrochemical apparatus, an electrochemical apparatus, and an electronic apparatus. The binding piece includes an insulation layer, a substrate layer, and at least one binding layer stacked together, where one of the at least one binding layer forms on an outer surface of the binding piece, 10% ≤ L₂ ≤100%, 1.2 ≤ L₁/L₂ ≤ 20, L₁ is an elongation rate of the insulation layer, and L₂ is an elongation rate of the substrate layer. The elongation rate L₁ of the insulation layer and the elongation rate L₂ of the substrate layer being controlled to satisfy the foregoing ranges and relationship can improve the safety performance of the electrochemical apparatus.

Certainly, implementing any embodiment of this application does not necessarily require all the advantages described above.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following descriptions show some embodiments of this application, and persons of ordinary skill in the art may still derive other drawings from these accompanying drawings.
FIG. 1 is a schematic structural diagram of a binding piece according to an embodiment of this application;
FIG. 2 is a schematic cross-sectional structural diagram of a binding piece in a thickness direction of the binding piece according to an embodiment of this application;
FIG. 3 is a schematic cross-sectional structure of the binding piece in FIG. 2 in the thickness direction of the binding piece after the binding piece is subjected to an external force;
FIG. 4 is a schematic cross-sectional structural diagram of a binding piece in a thickness direction of the binding piece according to another embodiment of this application;
FIG. 5 is a schematic cross-sectional structural diagram of a binding piece in a thickness direction of the binding piece according to still another embodiment of this application;
FIG. 6 is a schematic cross-sectional structural diagram of a binding piece in a thickness direction of the binding piece according to yet another embodiment of this application;
FIG. 7 is a schematic structural diagram of an electrochemical apparatus according to an embodiment of this application;
FIG. 8 is a schematic cross-sectional structural diagram of an electrochemical apparatus in a thickness direction of the electrochemical apparatus according to an embodiment of this application;
FIG. 9 is a schematic cross-sectional structural diagram of an electrochemical apparatus in a thickness direction of the electrochemical apparatus according to another embodiment of this application;
FIG. 10 is a schematic cross-sectional structural diagram of an electrochemical apparatus in a thickness direction of the electrochemical apparatus according to still another embodiment of this application;
FIG. 11 is a schematic cross-sectional structural diagram of an electrochemical apparatus in a thickness direction of the electrochemical apparatus according to still another embodiment of this application; and
FIG. 12 is a schematic diagram of a binding piece being adhered to an electrode assembly according to an embodiment of this application.

### DETAILED DESCRIPTION

The following clearly and completely describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

It should be noted that, in the specific embodiments of this application, an example in which a lithium-ion battery is used as an electrochemical apparatus is used to illustrate this application. However, the electrochemical apparatus in this application is not limited to the lithium-ion battery.

A first aspect of this application provides a binding piece for electrochemical apparatus, where the binding piece includes an insulation layer, a substrate layer, and at least one binding layer stacked together, where one of the at least one binding layer forms on an outer surface of the binding piece, 10% ≤ L₂ ≤100%, 1.2 ≤ L₁/L₂ ≤ 20, L₁ is an elongation rate of the insulation layer, and L₂ is an elongation rate of the substrate layer. For example, the elongation rate L₂ of the substrate layer may be 10%, 15%, 20%, 50%, 80%, 100%, or in a range defined by any two of these values, and the value of L₁/L₂ may be 1.2, 1.5, 2, 3, 4, 5, 6, 7, 8, 9, 10, 15, 20, or in a range defined by any two of these values. One of the at least one binding layer forming on the outer surface of the binding piece means that the at least one binding layer forms on at least one of two surfaces in a thickness direction of the binding piece.

The applicant has found that when the electrochemical apparatus is subjected to an external force, the substrate layer provided in the binding piece can be extended and deformed under the action of the external force due to the good extensibility of the substrate layer, alleviating damage of the external force to the internal structure of the electrochemical apparatus, for example, damage to a positive electrode plate or a negative electrode plate. In addition, the substrate layer has specified strength such that puncture resistance of the electrochemical apparatus can be improved. In addition, the binding piece includes the insulation layer, and the insulation layer has better extensibility and can cover the substrate layer. This can alleviate impact of burrs or fins caused by damage of external force to the substrate layer on the internal structure of the electrochemical apparatus, and exert the advantage of high elongation rate of the insulation layer to resist external force, thereby helping to improve the safety performance of the electrochemical apparatus. However, when the elongation rate L₂ of the substrate layer is too low (for example, lower than 10%), the substrate layer has insufficient extensibility, and as a result, a large number of burrs and chippings are easily generated under the action of external force, such that the safety performance of the electrochemical apparatus is not obviously improved. When the elongation rate L₂ of the substrate layer is too high (for example, higher than 100%), the tensile strength of the substrate layer is difficult to be guaranteed, and the structural stability of the binding piece is reduced. This does not help to improve the puncture resistance of the electrochemical apparatus, thereby affecting the safety performance of the electrochemical apparatus. When the value of L₁/L₂ is too small (for example, less than 1.2), the elongation rates of the insulation layer and the substrate layer are too close, and the insulation layer does not have sufficient extensibility and therefore does not have effective covering and protection functions for the substrate layer. As a result, the safety performance of the electrochemical apparatus is not obviously improved. When the value of L₁/L₂ is too large (for example, greater than 20), a difference between the elongation rates of the insulation layer and the substrate layer is large, affecting the structural stability of the binding piece and hence affecting the safety performance of the electrochemical apparatus. The elongation rate L₁ of the insulation layer and the elongation rate L₂ of the substrate layer being controlled to satisfy the foregoing ranges and relationship can improve the safety performance of the electrochemical apparatus. In addition, provision of the insulation layer can also alleviate corrosion of an electrolyte to the substrate layer during cycling of the electrochemical apparatus, so as to maintain good stability of the binding piece and also help to improve the safety performance of the electrochemical apparatus. In this application, the foregoing elongation rate is an elongation rate commonly known in the art.

In some embodiments of this application, a tensile strength of the insulation layer is 5 MPa to 100 MPa. For example, the tensile strength of the insulation layer may be 5 MPa, 10 MPa, 20 MPa, 30 MPa, 40 MPa, 50 MPa, 60 MPa, 70 MPa, 80 MPa, 90 MPa, 100 MPa, or in a range defined by any two of these values. When the tensile strength of the insulation layer is too low (for example, lower than 5 MPa), mechanical performance of the binding piece as a whole is affected, and hence the safety performance of the electrochemical apparatus is affected. When the tensile strength of the insulation layer is too high (for example, higher than 100 MPa), material costs of the insulation layer increase, and therefore the costs of the electrochemical apparatus also increase. The tensile strength of the insulation layer is controlled within the foregoing range, such that the insulation layer is not prone to breakage in resisting external force when exerting its advantage of elongation rate, thereby helping to improve the safety performance and control the costs of the electrochemical apparatus. In this application, the foregoing tensile strength is tensile strength commonly known in the art.

In some embodiments of this application, a thickness T of the insulation layer satisfies 0.5 µm ≤ T ≤ 50 µm. For example, the thickness T of the insulation layer may be 0.5 µm, 1 µm, 5 µm, 10 µm, 15 µm, 20 µm, 25 µm, 30 µm, 35 µm, 40 µm, 45 µm, 50 µm, or in a range defined by any two of these values. When the thickness of the insulation layer is too small (for example, smaller than 0.5 µm), burrs or fins caused by damage of external force to the substrate layer may pierce the insulation layer, affecting the safety performance of the electrochemical apparatus. When the thickness of the insulation layer is too large (for example, larger than 50 µm), the excessively thick insulation layer affects the energy density of the electrochemical apparatus. The thickness of the insulation layer being controlled within the foregoing range improves the safety performance of the electrochemical apparatus almost without affecting energy density of the electrochemical apparatus. In addition, the thickness of the insulation layer impacts the elongation rate of the insulation layer to some extent. Therefore, the elongation rate of the insulation layer can be adjusted by controlling the thickness of the insulation layer. The thickness of the insulation layer is controlled within the foregoing range, such that the resulting insulation layer can have an elongation rate satisfying the foregoing relationship, thereby helping to improve the safety performance of the electrochemical apparatus.

In some embodiments of this application, the insulation layer includes inorganic insulation particles and a binder, where the inorganic insulation particles include at least one of aluminum oxide, titanium dioxide, magnesium oxide, zirconium oxide, or zinc oxide, and the binder includes at least one of polyvinylidene fluoride, polyacrylate salt, polyacrylic acid, polyacrylate ester, polymethyl methacrylate, polyacrylonitrile, polyamide, or sodium carboxymethyl cellulose. The insulation layer includes the foregoing inorganic insulation particles and binder, such that the resulting insulation layer has desirable insulation and strength, and the elongation rate satisfying the foregoing relationship, thereby helping to improve the safety performance of the electrochemical apparatus. Specifically, the elongation rate of the insulation layer may be adjusted by controlling the type and proportion of the inorganic insulation particles and the type and proportion of the binder. The proportions of the inorganic insulation particles and the binder are not particularly limited in this application, provided that the elongation rate of the insulation layer is satisfied. For example, based on a mass of the insulation layer, a mass percentage of the inorganic insulation particles is 50% to 98% and a mass percentage of the binder is 2% to 50%.

In some embodiments of this application, the insulation layer includes a polymer, where the polymer includes at least one of polypropylene, polyethylene, polyethylene terephthalate, polyvinyl chloride, polyamide, polystyrene, natural rubber, cis-butadiene rubber, neoprene, styrene-butadiene rubber, nitrile rubber, silicone rubber, isoprene rubber, or ethylene-propylene rubber. The insulation layer includes the foregoing polymer, such that the resulting insulation layer has desirable insulation and strength, and the elongation rate satisfying the foregoing relationship, thereby helping to improve the safety performance of the electrochemical apparatus. Specifically, the elongation rate of the insulation layer may be adjusted by controlling the type and molecular weight of the polymer.

In some embodiments of this application, the insulation layer is a non-woven fabric, where the non-woven fabric is made of at least one of polyethylene, polypropylene, polytetrafluoroethylene, polyethylene terephthalate, cellulose, polyimide, or polyamide. The non-woven fabric is made of the foregoing material, such that the resulting insulation layer has desirable insulation and strength, and the elongation rate satisfying the foregoing relationship, thereby helping to improve the safety performance of the electrochemical apparatus. Specifically, the elongation rate of the insulation layer may be adjusted by controlling the type and molecular weight of the non-woven fabric.

In some embodiments of this application, tensile strength of the substrate layer is 200 MPa to 1500 MPa, and 12% ≤ L₁ ≤ 200%. For example, the tensile strength of the substrate layer may be 200 MPa, 300 MPa, 400 MPa, 500 MPa, 600 MPa, 800 MPa, 1000 MPa, 1100 MPa, 1200 MPa, 1300 MPa, 1400 MPa, 1500 MPa, or in a range defined by any two of these values, and the elongation rate L₁ of the insulation layer may be 12%, 20%, 30%, 40%, 50%, 60%, 70%, 80%, 90%, 100%, 150%, 200%, or in a range defined by any two of these values. When the tensile strength of the substrate layer is too low (for example, lower than 200 MPa), the overall mechanical performance of the binding piece is poor. As a result, the safety performance of the electrochemical apparatus is not obviously improved. When the tensile strength of the substrate layer is too high (for example, higher than 1500 MPa), material costs of the substrate layer increase, and therefore the costs of the electrochemical apparatus also increase. When the elongation rate L₁ of the insulation layer is too low (for example, lower than 12%), the insulation layer has insufficient extensibility, and as a result, a large number of burrs and chippings are easily generated under the action of external force, such that the safety performance of the electrochemical apparatus is not obviously improved. The elongation rate L₁ of the insulation layer being too high (for example, higher than 200%) does not help with synergy between the substrate layer and the at least one binding layer while such synergy improves the safety performance of the electrochemical apparatus. The tensile strength of the substrate layer and the elongation rate L₁ of the insulation layer being controlled within the foregoing ranges helps to improve the safety performance of the electrochemical apparatus and control the costs of the electrochemical apparatus.

In some embodiments of this application, a thickness of the substrate layer is 1 µm to 50 µm. For example, the thickness of the substrate layer may be 1 µm, 5 µm, 10 µm, 15 µm, 20 µm, 25 µm, 30 µm, 35 µm, 40 µm, 45 µm, 50 µm, or in a range defined by any two of these values. When the thickness of the substrate layer is too small (for example, smaller than 1 µm), the mechanical performance of the binding piece as a whole is affected, and hence the safety performance of the electrochemical apparatus is affected. When the thickness of the substrate layer is too large (for example, larger than 50 µm), the excessively thick substrate layer may affect the energy density of the electrochemical apparatus. The thickness of the substrate layer being controlled within the foregoing range improves the safety performance of the electrochemical apparatus almost without affecting energy density of the electrochemical apparatus. In addition, the thickness of the substrate layer impacts the elongation rate of the substrate layer to some extent. Therefore, the elongation rate of the substrate layer can be adjusted by controlling the thickness of the substrate layer. The thickness of the substrate layer is controlled within the foregoing range, such that the resultant substrate layer can have an elongation rate satisfying the foregoing relationship, thereby helping to improve the safety performance of the electrochemical apparatus.

In some embodiments of this application, the substrate layer is made of at least one of gold, gold alloy, silver, silver alloy, platinum, platinum alloy, copper, copper alloy, magnesium, magnesium alloy, aluminum, aluminum alloy, titanium alloy, nickel, nickel alloy, stainless steel, or another iron alloy. The another iron alloy refers to iron alloy other than stainless steel, has an elongation rate satisfying 10% ≤ L₂ ≤ 100% and 1.2 ≤ L₁/L₂ ≤ 20, and is not likely to react with the electrolyte in the electrochemical apparatus. Selection of the substrate layer made of the foregoing material can satisfy the foregoing elongation rate relationship, and help to obtain a binding piece having good mechanical performance, thereby improving the safety performance of the electrochemical apparatus. Specifically, the elongation rate of the substrate layer may be adjusted by adjusting a material type and a preparation process (for example, annealing temperature and annealing time) of the substrate layer.

In some embodiments of this application, 50 N/m ≤ C ≤ 1000 N/m, C is a peel strength of the one of the at least one binding layer, and thickness of the one of the at least one binding layer is 0.5 µm to 50 µm. For example, the peel strength C of the one of the at least one binding layer may be 50 N/m, 100 N/m, 200 N/m, 300 N/m, 400 N/m, 500 N/m, 600 N/m, 700 N/m, 800 N/m, 900 N/m, 1000 N/m, or in a range defined by any two of these values, and the thickness T of the one of the at least one binding layer may be 0.5 µm, 1 µm, 5 µm, 10 µm, 15 µm, 20 µm, 25 µm, 30 µm, 35 µm, 40 µm, 45 µm, 50 µm, or in a range defined by any two of these values. When the peel strength C of the one of the at least one binding layer is too small (for example, smaller than 50 N/m), the one of the at least one binding layer has insufficient peel strength and therefore shifting of layers occurs under the action of external force, and the binding performance of the one of the at least one binding layer of the binding piece cannot be guaranteed, affecting the safety performance of the electrochemical apparatus. When the peel strength C of the one of the at least one binding layer is too large (for example, larger than 1000 N/m), the one of the at least one binding layer is rigid and easily breaks under external force, thereby affecting the safety performance of the electrochemical apparatus. When the thickness of the one of the at least one binding layer is too small (for example, smaller than 0.5 µm), the one of the at least one binding layer has insufficient peel strength, affecting the safety performance of the electrochemical apparatus. When the thickness of the one of the at least one binding layer is too large (for example, larger than 50 µm), the excessively thick binding layer may affect the energy density of the electrochemical apparatus. The peel strength and the thickness of the one of the at least one binding layer being controlled within the foregoing ranges improves the safety performance of the electrochemical apparatus almost without affecting energy density of the electrochemical apparatus.

In some embodiments of this application, the at least one binding layer includes at least one of an acrylic compound, an acrylic ester compound, a phosphate ester compound, a polyurethane compound, rosin resin, terpene resin, phenolic resin, petroleum resin, an epoxy resin compound, a vinyl acetate compound, a polyvinyl acetal compound, a polyamide compound, vulcanized silicone rubber, furan resin, a formaldehyde resin compound, a polyimide compound, urea formaldehyde resin, polypropylene, styrene, polyethylene, or vinyl copolymer. Preferably, the at least one binding layer includes at least one of acrylic acid, methyl acrylate, ethyl acrylate, propyl acrylate, butyl acrylate, 2-ethylhexyl acrylate, polyethylene, vinyl copolymer, polyvinyl acetal, polypropylene, or vulcanized rubber. Selection of the foregoing material helps to obtain the at least one binding layer with a great peel strength, thereby improving the safety performance of the electrochemical apparatus.

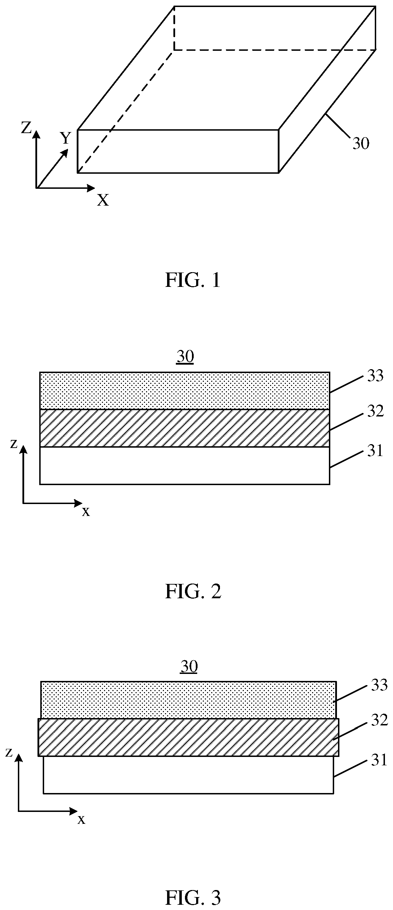

FIG. 1 shows a binding piece 30 in some embodiments of this application. For ease of understanding, a three-dimensional rectangular coordinate system is established with a width direction of the binding piece 30 as a direction X, a length direction of the binding piece 30 as a direction Y, and a thickness direction of the binding piece 30 as a direction Z.

In some embodiments of this application, in the binding piece 30 shown in FIG. 2, an insulation layer 32 is disposed between a substrate layer 33 and a binding layer 31. An elongation rate L₁ of the insulation layer and an elongation rate L₂ of the substrate layer satisfy 10% ≤ L₂ ≤ 100% and 1.2 ≤ L₁/L₂ ≤ 20, such that the elongation rate L₁ of the insulation layer is higher than the elongation rate L₂ of the substrate layer. When the electrochemical apparatus is subjected to an external force, deformation of the insulation layer 32 having a higher elongation rate in the width direction (direction X) of the binding piece 30 is greater than deformation of the substrate layer 33 in the width direction (direction X) of the binding piece 30 (as shown in FIG. 3), and deformation of the insulation layer 32 in the length direction (direction Y) of the binding piece 30 is greater than deformation of the substrate layer 33 in the length direction (direction Y) of the binding piece 30. In this way, the insulation layer can entirely cover the substrate layer, and therefore alleviates impact of burrs or fins caused by damage of external force to the substrate layer on the internal structure of the electrochemical apparatus, and exerts the advantage of high elongation rate of the insulation layer to resist external force, thereby helping to improve the safety performance of the electrochemical apparatus.

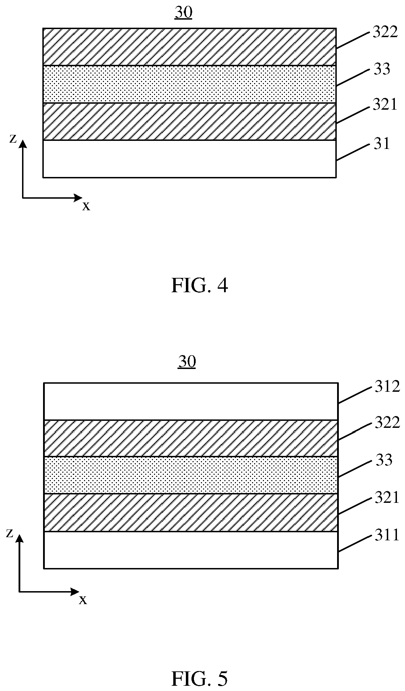

In some embodiments of this application, in the binding piece 30 shown in FIG. 4, the insulation layer 32 in the binding piece 30 includes a first insulation layer 321, a second insulation layer 322, and a binding layer 31. The first insulation layer 321, the substrate layer 33, and the second insulation layer 322 are sequentially stacked. In other words, the substrate layer 33 is disposed between the first insulation layer 321 and the second insulation layer 322. In this way, the first insulation layer and the second insulation layer cover the substrate layer from two sides of the substrate layer in the thickness direction (the same as the direction Z) of the substrate layer. This can better alleviate impact of burrs or fins caused by damage of external force to the substrate layer on the internal structure of the electrochemical apparatus, thereby improving the safety performance of the electrochemical apparatus. In this application, the first insulation layer and the second insulation layer may be made of same or different materials. Specifically, the materials of the first insulation layer and the second insulation layer are each independently selected from the materials of the insulation layer that are included in any one of the foregoing embodiments. The first insulation layer and the second insulation layer may be the same or different in thickness, and preferably, the first insulation layer and the second insulation layer are the same in thickness. The first insulation layer and the second insulation layer have the same function as the foregoing insulation layer in the embodiments of this application.

In some embodiments of this application, in the binding piece 30 shown in FIG. 5, the binding layer 31 in the binding piece 30 includes a first binding layer 311 and a second binding layer 312. The first binding layer 311, the first insulation layer 321, the substrate layer 33, the second insulation layer 322, and the second binding layer 312 are sequentially stacked. In other words, the binding piece 30 includes the first binding layer 311 and the second binding layer 312 in the thickness direction (direction Z) of the binding piece 30. In this way, the peel strength of the binding piece can be increased, thereby helping to improve the safety performance of the electrochemical apparatus. In this application, the first binding layer and the second binding layer may be made of same or different materials. Specifically, the materials of the first binding layer and the second binding layer are each independently selected from the materials of the binding layer that are included in any one of the foregoing embodiments. The first binding layer and the second binding layer may be the same or different in thickness, and preferably, the first binding layer and the second binding layer are the same in thickness. The first binding layer and the second binding layer have the same function as the foregoing binding layer in the embodiments of this application.

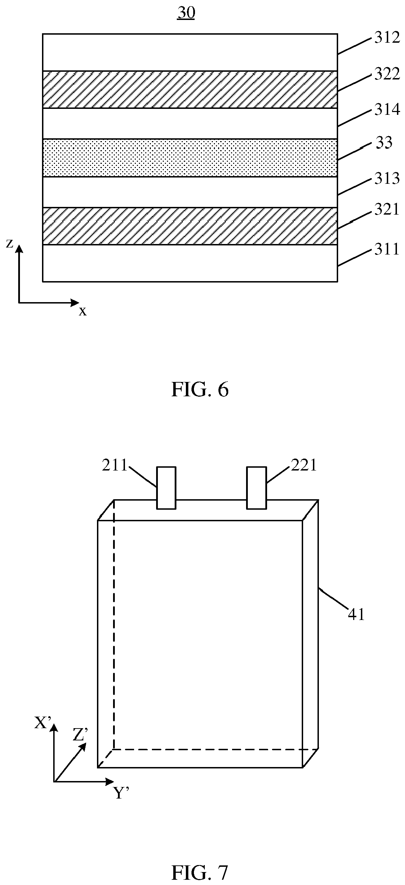

In some embodiments of this application, in the binding piece 30 shown in FIG. 6, the binding layer 31 of the binding piece 30 includes a third binding layer 313 disposed between the substrate layer 33 and the first insulation layer 321, and a fourth binding layer 314 disposed between the substrate layer 33 and the second insulation layer 322. In this way, not only the peel strength of the binding piece can be increased, but also the overall strength of the binding piece can be increased, thereby helping to improve the safety performance of the electrochemical apparatus. In this application, the third binding layer and the fourth binding layer may be made of same or different materials. Specifically, the materials of the third binding layer and the fourth binding layer are each independently selected from the materials of the binding layer that are included in any one of the foregoing embodiments. The third binding layer and the fourth binding layer may be the same or different in thickness, and preferably, the third binding layer and the fourth binding layer are the same in thickness. The third binding layer and the fourth binding layer have the same function as the foregoing binding layer in the embodiments of this application.

A second aspect of this application provides an electrochemical apparatus. The electrochemical apparatus includes an electrode assembly, a packaging bag, and the binding piece according to any one of the foregoing embodiments. The electrochemical apparatus provided in this application has good safety performance. The electrode assembly and the packaging bag refer to an electrode assembly and a packaging bag commonly known in the art, and are not limited in this application.

FIG. 7 shows an electrochemical apparatus in some embodiments of this application. An electrode assembly (not shown in the figure) is disposed in a packaging bag 41. The electrode assembly includes a positive tab 211 and a negative tab 221, and the positive tab 211 and the negative tab 221 extend along a length direction of the electrochemical apparatus. For ease of understanding, a three-dimensional rectangular coordinate system is established with the length direction of the electrochemical apparatus as a direction X', a width direction of the electrochemical apparatus as a direction Y', and a thickness direction of the electrochemical apparatus as a direction Z'. A length direction of the electrode assembly is the same as the length direction of the electrochemical apparatus (direction X'), a width direction of the electrode assembly is the same as the width direction of the electrochemical apparatus (direction Y'), and a thickness direction of the electrode assembly is the same as the thickness direction of the electrochemical apparatus (direction Z'). The positive tab and the negative tab are a positive tab and a negative tab commonly known in the art, and are not limited in this application.

In some embodiments of this application, the electrode assembly is disposed in the packaging bag, the binding piece is disposed between the electrode assembly and the packaging bag, and the one of the at least one binding layer is adhered to an outer surface of the electrode assembly. In this way, the resulting electrochemical apparatus has good safety performance.

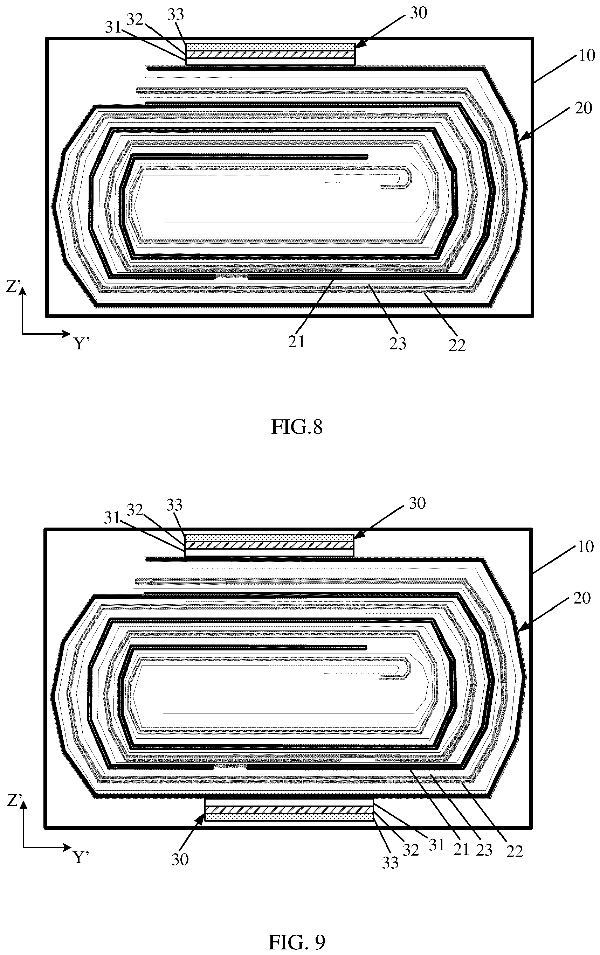

For example, as shown in FIG. 8, an electrode assembly 20 includes a positive electrode plate 21, a negative electrode plate 22, and a separator 23. The electrode assembly 20 is disposed in a package bag 10, and a binding piece 30 having the structure shown in FIG. 2 is disposed between the electrode assembly 20 and the package bag 10. A binding layer 31 is adhered to an outer surface on one side of the electrode assembly 20 in a thickness direction of the electrode assembly 20 (direction Z'). Alternatively, as shown in FIG. 9, the binding layer 31 is adhered to outer surfaces on two sides of the electrode assembly 20 in the thickness direction of the electrode assembly 20 (direction Z'). This helps to improve the extrusion-resistant mechanical strength of the electrode assembly, thereby improving the safety performance of the electrochemical apparatus. It can be understood that the binding piece may be adhered to outer surfaces on two sides of the electrode assembly in the thickness direction of the electrode assembly (direction Z') and outer surfaces on two sides of the electrode assembly in the width direction of the electrode assembly (direction Y'). The adhering position(s) and quantity of the binding piece may be selected based on an actual situation. Further, the method for adhering the binding piece having the structure shown in FIG. 4 is similar to the method for adhering the binding piece having the structure shown in FIG. 2, and the specific adhering position(s) and quantity of the binding piece may be selected based on an actual situation. In this application, the positive electrode plate includes a positive electrode current collector and a positive electrode material layer disposed on a surface in a thickness direction of the positive electrode current collector (the same as the direction Z'). The negative electrode plate includes a negative electrode current collector and a negative electrode material layer disposed on a surface in a thickness direction of the negative electrode current collector (the same as the direction Z'). The outer surface of the electrode assembly is a surface close to the packaging bag. The outer surface of the electrode assembly may be a surface of the positive current collector, the negative current collector, the negative electrode material layer, or a separator.

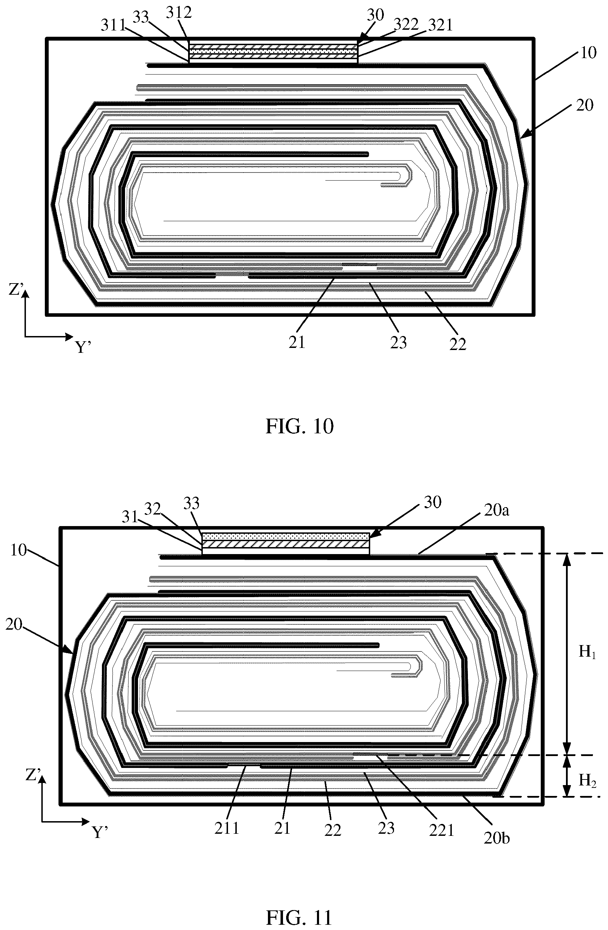

For example, as shown in FIG. 10, a binding piece 30 having the structure shown in FIG. 5 is disposed between the electrode assembly 20 and the package bag 10. A first binding layer 311 is adhered to an outer surface on one side of the electrode assembly 20 in a thickness direction of the electrode assembly 20 (direction Z'). A second binding layer 312 is adhered to an inner surface of the packaging bag 10 close to the electrode assembly 20. In this way, not only the extrusion-resistant mechanical strength of the electrode assembly can be increased, but also the peel strength between the electrode assembly and the packaging bag can be increased, so as to improve the structural stability of the electrochemical apparatus, thereby improving the safety performance of the electrochemical apparatus. It can be understood that, alternatively, the second binding layer is adhered to the outer surface of the electrode assembly in the thickness direction (direction Z') of the electrode assembly, and the first binding layer is adhered to the inner surface of the packaging bag close to the electrode assembly; and biding piece may be adhered to outer surfaces in the thickness direction (direction Z') and in the width direction (direction Y') of the electrode assembly. The adhering position(s) and quantity of the binding piece may be selected based on an actual situation. Further, the method for adhering the binding piece having the structure shown in FIG. 6 is similar to the method for adhering the binding piece having the structure shown in FIG. 5, and the adhering position(s) and quantity of the binding piece may be selected based on an actual situation.

In some embodiments of this application, the electrode assembly is a winding structure, the electrode assembly includes a tab, the electrode assembly includes a first surface and a second surface in a thickness direction of the electrode assembly (direction Z'), a distance from the tab to the first surface is H₁, and a distance from the tab to the second surface is H₂, where H₁/H₂ > 1, and the one of the at least one binding layer is adhered to the first surface. The tab is close to the second surface. When the electrochemical apparatus is subjected to an external force, the tab can provide some support for the second surface of the electrode assembly, thereby improving the extrusion-resistant mechanical strength of the second surface. In addition, the binding piece being adhered to the first surface of the electrode assembly can improve the extrusion-resistant mechanical strength of the first surface. In this way, the resulting electrochemical apparatus has high extrusion-resistant mechanical strength, thereby helping to improve the safety performance of the electrochemical apparatus. The tab is a tab commonly known in the art, and is not limited in this application.

For example, as shown in FIG. 11, an electrode assembly 20 is of a winding structure, and the electrode assembly 20 includes a positive tab 211 and a negative tab 221. The positive tab 211 is connected to a positive electrode plate 21, and the negative tab 221 is connected to a negative electrode plate 22. In a thickness direction of the electrode assembly 20 (direction Z'), a distance from the negative tab 221 to a first surface 20a of the electrode assembly 20 is H₁, and a distance from the negative tab 221 to a second surface 20b of the electrode assembly 221 is H₂, where Hi is greater than H₂. In addition, a distance from the positive tab 211 to the first surface 20a of the electrode assembly 20 is also greater than a distance from the positive tab 211 to the second surface 20b of the electrode assembly 20. The binding piece 30 having the structure in FIG. 2 is adhered to the first surface 20a. This helps to increase the extrusion-resistant mechanical strength of the first surface and hence increase the overall extrusion-resistant mechanical strength of the electrochemical apparatus, such that the resulting electrochemical apparatus has good safety performance. It can be understood that the binding piece having the structure shown in FIG. 4 to FIG. 6 can be adhered to the first surface of the electrode assembly in accordance with the principles described above. For the binding piece having the structure shown in FIG. 5 and FIG. 6, if the first binding layer is adhered to the first surface of the electrode assembly, the second binding layer is adhered to an inner surface of the packaging bag close to the electrode assembly and if the second binding layer is adhered to the first surface of the electrode assembly, the first binding layer is adhered to an inner surface of the packaging bag close to the electrode assembly.

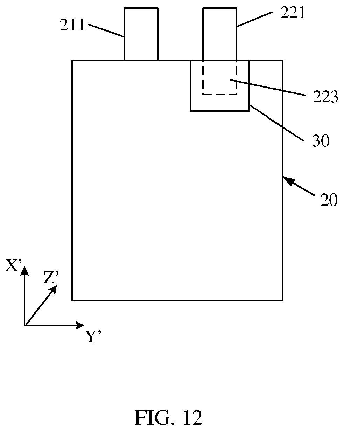

In some embodiments of this application, the electrode assembly includes a tab and an electrode plate, the electrode plate includes a connection region, the tab is connected to the electrode plate at the connection region, the one of the at least one binding layer is adhered onto the connection region, and an orthographic projection of the binding piece and an orthographic projection of the connection region at least partially overlap in the thickness direction of the electrode assembly. Preferably, the area of the orthographic projection of the binding piece is larger than or equal to the area of the orthographic projection of the connection region, and the orthographic projection of the connection region is located within the orthographic projection of the binding piece. For example, as shown in FIG. 12, an electrode assembly 20 includes a positive tab 211 and a negative tab 221. The negative tab 221 is connected to a negative electrode plate (not shown in the figure) and has a connection region 223. A binding layer (not shown in the figure) of a binding piece 30 covers an outer surface of the electrode assembly 20. In the thickness direction (direction Z') of the electrode assembly 20, the binding piece 30 covers the connection region 223, and the area of the binding piece 30 is larger than the area of the connection area 223, in other words, the area of an orthographic projection of the binding piece 30 is larger than the area of an orthographic projection of the connection region 223. In this way, when the electrochemical apparatus is subjected to an external force, the provision of the binding piece can protect tabs so as to reduce the risk of deformation or breakage of the tabs and helps to improve the safety performance of the electrochemical apparatus. For ease of understanding, with reference to FIG. 11, the orthographic projection of the binding piece 30 is an orthographic projection of the binding piece 30 on either of two opposite surfaces of the packaging bag 10 in the direction Z', and the orthographic projection of the connection region 223 is an orthographic projection of the connection region 223 on either of two opposite surfaces of the packaging bag 10 in the direction Z'.

In some embodiments of this application, the tab is a negative tab. The negative tab and the positive tab may have edge burrs. When the negative tab is disposed on the negative electrode plate, and the positive tab is disposed on the positive electrode plate, welding burrs may be generated. Negative tabs are mostly made of nickel-containing materials, and therefore have higher mechanical strength than positive tabs (which are mostly made of aluminum-containing materials). As a result, burs at the negative tab have greater strength and is more likely to pierce the separator, affecting the safety performance of the electrochemical apparatus. The mechanical performance of the electrode assembly corresponding to the connection area can be enhanced by adhering the binding piece to the position shown in FIG. 12, and deformation of the electrode assembly can be reduced under the action of an external force, so as to reduce the risk of burrs of the negative tab puncturing the separator, and further improve the safety performance of the electrochemical apparatus.

It should be noted that the binding piece 30 in FIG. 8 to FIG. 11 is a schematic cross-sectional view of the X-Z plane of the binding piece 30 in its own thickness direction (direction Z), which is merely an example. In actual application, the adhering method of a binding piece can be selected according to an actual situation.

This application has no particular limitation on the preparation method of binding piece, provided that the objectives of this application can be achieved. For example, the preparation method of binding piece having the structure shown in FIG. 2 may include but is not limited to the following steps: dissolving the substances used in the insulation layer in the insulation layer solvent to obtain an insulation layer slurry, dissolving the substances used in the binding layer in the binding layer solvent to obtain a binding layer slurry, coating the insulation layer slurry on the substrate layer followed by drying to obtain the insulation layer, and then coating the binding layer slurry on the insulation layer followed by drying to obtain a binding piece. Optionally, the insulation layer film is attached to the surface of the substrate layer by hot pressing treatment to obtain an insulation layer, and then the binding layer slurry is applied on the insulation layer and dried to obtain a binding piece.

The electrochemical apparatus in this application is not particularly limited, and may include any apparatus in which an electrochemical reaction occurs. In some embodiments, the electrochemical apparatus may include but is not limited to a lithium metal secondary battery, a lithium-ion secondary battery (lithium-ion battery), a lithium polymer secondary battery, or a lithium-ion polymer secondary battery.

A preparation process of the electrochemical apparatus is well known to persons skilled in the art, and is not particularly limited in this application. For example, the preparation process may include but is not limited to the following steps: a positive electrode plate, a separator, and a negative electrode plate are stacked in sequence and go through operations such as winding and folding as needed to obtain an electrode assembly with a winding structure, the electrode assembly is put into a packaging bag after being adhered with a binding piece, and the packaging bag is injected with an electrolyte and sealed to obtain an electrochemical apparatus; or a positive electrode plate, a separator, and a negative electrode plate are stacked in sequence, four corners of the entire laminated structure are fixed with tapes to obtain an electrode assembly with a laminated structure, the electrode assembly is put into a packaging bag after being adhered with a binding piece, and the packaging bag is injected with an electrolyte and sealed to obtain an electrochemical apparatus. In addition, if necessary, an overcurrent prevention element, a guide plate, and the like may be placed in the packaging bag to prevent pressure increase, overcharge, and discharge in the electrochemical apparatus. The materials and preparation methods of the positive electrode plate, the separator, the negative electrode plate, and the electrolyte in this application may be those known in the art, and are not limited in this application.

A second aspect of this application provides an electronic apparatus, including the electrochemical apparatus according to any one of the foregoing embodiments. The electrochemical apparatus provided in this application has good safety performance, such that the electronic apparatus provided in this application has good safety performance.

The electronic apparatus in this application is not particularly limited, and may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

### Examples

The following describes the embodiments of this application more specifically by using examples and comparative examples. Various tests and evaluations are performed in the following methods. In addition, unless otherwise specified, "part" and "%" are based on weight.

### Test method and device

### Test for tensile strength Q and elongation rate L

A test sample was punched into a 15 mm × 70 mm sample with a punching machine. The resulting sample was fixed onto test clamps of a Gotech tensile machine to test the tensile strength of the sample at a stretching speed of 5 mm/min, with a standard distance S₀ between the two clamps of the tensile machine set to 50 mm. Tensile strengths and displacements were recorded, and the tensile strength Q of the test sample was the maximum tensile strength in the displacement curve. When the test sample was broken, the elongation displacement of the test sample was the maximum elongation distance Si of the test sample. The formula for calculating the elongation rate of the test sample is L= S₁/S₀ × 100%.

To be specific, when the elongation rate and tensile strength of the substrate layer were tested, it was necessary to wipe and scrape the insulation layer and binding layer on the surface of the binding piece with absolute ethyl alcohol, with the substrate layer itself retained. When testing the elongation rate and tensile strength of the insulation layer, it was necessary to wipe and soak the binding piece with alcohol and N-methylpyrrolidone (NMP) for 3 h. After the adhesion between the insulation layer and the substrate layer was weakened, the insulation layer in the binding piece was separated with a blade and then tested.

### Test for maximum puncture resistance

A lithium-ion battery was fully charged. A triangle bar extruder (model: DKBF-3KH; manufacturer: Dae Kyung) was used to extrude the geometric center of the lithium-ion battery with round bars having a diameter of 6 ± 0.1 mm and a length of 6.7 cm. The extrusion speed was 300 N/min. A downward pressure was applied to a surface of the lithium-ion battery. The downward pressure and the downward displacement were recorded. The point where the downward displacement showed a sudden change was recorded as the point where the lithium-ion battery broke. The corresponding force was recorded as a maximum puncture resistance.

### Example 1-1

### <Preparation of positive electrode plate>

A positive electrode active material LiCoO₂, a conductive agent conductive carbon black, and a binder polyvinylidene fluoride were mixed at a mass ratio of 96:2:2, added with N-methylpyrrolidone (NMP), and well stirred by a vacuum stirrer to obtain a positive electrode slurry with a solid content of 70wt%. The positive electrode slurry was uniformly applied onto one surface of a positive electrode current collector aluminum foil with a thickness of 12 µm, and the aluminum foil was dried at 120°C for 1 h to obtain a positive electrode plate coated with a positive electrode material layer on one surface. The foregoing steps were repeated on another surface of the aluminum foil to obtain a positive electrode plate coated with positive electrode material layers on two surfaces. After cold pressing, cutting, and slitting, drying was performed in vacuum at 120°C for 1 h to obtain a 74 mm × 867 mm positive electrode plate. A positive tab was welded to the positive electrode plate, and the positive tab was made of aluminum foil.

### <Preparation of negative electrode plate>

A negative electrode active material graphite, a binder butadiene styrene rubber, and a thickener sodium carboxymethyl cellulose were mixed at a mass ratio of 97.4:1.4:1.2, with deionized water added. The foregoing substances were well mixed in a vacuum mixer to obtain a negative electrode slurry, where a solid content of the negative electrode slurry was 75wt%. The negative electrode slurry was uniformly applied onto one surface of a negative electrode current collector copper foil with a thickness of 12 µm, and the copper foil was dried at 120°C to obtain a negative electrode plate coated with a negative electrode material layer of 130 µm in thickness on one surface. The foregoing steps were repeated on another surface of the copper foil to obtain a negative electrode plate coated with negative electrode material layers on two surfaces. After cold pressing, cutting, and slitting, drying was performed in vacuum at 120°C for 1 h to obtain a 78 mm × 875 mm negative electrode plate. A negative tab was welded to the negative electrode plate, and the negative tab was made of nickel-plated copper foil.

### <Preparation of electrolyte>

In a glove box under argon atmosphere with a moisture content less than 10 ppm, ethylene carbonate, propylene carbonate, and dimethyl carbonate were mixed at a mass ratio of 7:2:1 to obtain an organic solvent, and then a lithium salt lithium hexafluorophosphate was added to the organic solvent to obtain an electrolyte. A concentration of the lithium salt was 1 mol/L.

### <Preparation of separator>

A polyethylene film (provided by Celgard) with a thickness of 7 µm was used.

### <Preparation of binding piece>

Preparation of binding layer slurry: Methyl methacrylate was fully dissolved in a solvent toluene to obtain a binding layer slurry with a solid content of 30wt%.

With a stainless steel foil-1 having a thickness of 20 µm as a substrate layer, a polypropylene film with a thickness of 7 µm was attached to one surface of the substrate layer through hot pressing treatment to obtain an insulation layer with a thickness of 5 µm. Then the binding layer slurry was applied onto the insulation layer, followed by drying at 85°C to obtain a binding piece, where the insulation layer and the binding layer in succession were sequentially arranged on the substrate layer of the binding piece. To be specific, the polypropylene in the insulation layer was polypropylene-1 with a molecular weight of 0.5 million to 3 million. The binding layer had a thickness of 5 µm. The hot pressing was performed at 200°C for 5s with the hot pressing pressure of 0.4 Mpa.

### <Preparation of lithium-ion battery>

The prepared positive electrode plate, separator, and negative electrode plate were stacked in sequence, such that the separator was disposed between the positive electrode plate and the negative electrode plate for separation. Then winding was performed to obtain an electrode assembly. The binding layer of the prepared binding piece was adhered to an outer surface of the electrode assembly. For an adhering position, refer to FIG. 12. The electrode assembly was put into an aluminum-plastic film packaging bag which was filled with the electrolyte after drying, followed by processes such as vacuum packaging, standing, formation, degassing, and cutting to obtain a lithium-ion battery.

### Example 1-2 to Example 1-8

These examples were the same as Example 1-1 except that the related preparation parameters were adjusted according to Table 1.

### Example 1-9

This example was the same as Example 1-1 except that a binding piece was prepared following the steps below:

A polypropylene film with a thickness of 7 µm was attached to another surface of the substrate layer of the binding piece prepared in Example 1-1 through hot pressing treatment to obtain a second insulation layer with a thickness of 5 µm. The insulation layer of the binding piece prepared in Example 1-1 was denoted as a first insulation layer.

### Example 1-10

This example was the same as Example 1-1 except that a binding piece was prepared following the steps below:
A binding layer slurry was applied onto the second insulation layer of the binding piece prepared in Example 1-6 to obtain a second binding layer, and drying was performed at 85°C to obtain a binding piece. The second binding layer had a thickness of 5 µm. The binding layer of the binding piece prepared in Example 1-6 was denoted as a first binding layer.

### Example 1-11

This example was the same as Example 1-10 except that a substrate layer was prepared following the steps below:
A binding layer slurry was applied onto one surface of the substrate player in Example 1-1 to prepare a third binding layer, drying was performed at 85°C, the binding layer slurry was applied onto another surface of the substrate layer in Example 1-1 to prepare a fourth binding layer, and then drying was performed at 85°C to obtain a substrate layer. Both the third binding layer and the fourth binding layer had a thickness of 5 µm.

### Example 1-12

This example was the same as Example 1-1 except that a binding piece was prepared following the steps below:
Preparation of insulation layer slurry: Inorganic insulation particles aluminum oxide and a binder polyvinylidene fluoride were mixed at a mass ratio of 80: 20, with a solvent NMP added and mixed to uniformity, to obtain an insulation layer slurry with a solid content of 40wt%.
Preparation of binding layer slurry: Methyl methacrylate was fully dissolved in a solvent toluene to obtain a binding layer slurry with a solid content of 30wt%.

With a stainless steel foil-1 having a thickness of 20 µm as a substrate layer, the insulation layer slurry was applied onto a surface of the substrate player to obtain an insulation layer, followed by drying at 85°C. Then the binding layer slurry was applied onto the insulation layer, followed by drying at 85°C to obtain a binding piece, where the insulation layer and the binding layer were sequentially arranged on the substrate layer of the binding piece. The insulation layer had a thickness of 5 µm, and the binding layer had a thickness of 5 µm.

### Example 1-13 and Example 1-14

These examples were the same as Example 1-12 except that the related preparation parameters were adjusted according to Table 1.

### Example 1-15 to Example 1-19

These examples were the same as Example 1-1 except that the related preparation parameters were adjusted according to Table 1.

### Example 1-20

This example was the same as Example 1-1 except that the polypropylene film was replaced with polypropylene non-woven fabric in <Preparation of binding piece>.

### Example 2-1 to Example 2-10

These examples were the same as Example 1-1 except that the related preparation parameters were adjusted according to Table 2.

### Comparative Example 1

This example was the same as Example 1-1 except that no binding piece was provided in a lithium-ion battery.

### Comparative Example 2 to Comparative Example 5

These examples were the same as Example 1-1 except that the related preparation parameters were adjusted according to Table 1.

The preparation parameters and performance tests of the Examples and Comparative Examples are shown in Table 1 and Table 2.

**Table 1**

| | Material of substrate layer | Elongation rate L₂ of substrate layer (%) | Tensile strength of substrate layer (MPa) | Material of insulation layer | Elongation rate L₁ of insulation layer (%) | Tensile strength of insulation layer (MPa) | L₁/L₂ | Maximum puncture resistance (N) |
|---|---|---|---|---|---|---|---|---|
| Example 1-1 | Stainless steel foil-1 | 10 | 900 | Polypropylene-1 | 30 | 25 | 3 | 1700 |
| Example 1-2 | Stainless steel foil-1 | 10 | 900 | Polypropylene-2 | 12 | 35 | 1.2 | 1729 |
| Example 1-3 | Stainless steel foil-1 | 10 | 900 | Polypropylene-3 | 100 | 20 | 10 | 1711 |
| Example 1-4 | Stainless steel foil-1 | 10 | 900 | Polypropylene-4 | 200 | 17 | 20 | 1703 |
| Example 1-5 | Stainless steel foil-2 | 40 | 400 | Polypropylene-4 | 200 | 17 | 2 | 1746 |
| Example 1-6 | Zinc-aluminium alloy | 100 | 230 | Polypropylene-4 | 200 | 17 | 2 | 1773 |
| Example 1-7 | Stainless steel foil-1 | 10 | 900 | Polypropylene- 5 | 5 | 40 | 4 | 1641 |
| Example 1-8 | Stainless steel foil-1 | 10 | 900 | Polypropylene- 6 | 230 | 15 | 1.5 | 1635 |
| Example 1-9 | Stainless steel foil-1 | 10 | 900 | Polypropylene-1 | 30 | 25 | 3 | 1731 |
| Example 1-10 | Stainless steel foil-1 | 10 | 900 | Polypropylene-1 | 30 | 25 | 3 | 1729 |
| Example 1-11 | Stainless steel foil-1 | 10 | 900 | Polypropylene-1 | 30 | 25 | 3 | 1717 |
| Example 1-12 | Stainless steel foil-1 | 10 | 900 | Aluminium oxide + polyvinylidene fluoride | 13 | 8 | 1.3 | 1697 |
| Example 1-13 | Stainless steel foil-1 | 10 | 900 | Titanium dioxide + polyvinylidene fluoride | 12 | 6 | 1.2 | 1671 |
| Example 1-14 | Stainless steel foil-1 | 10 | 900 | Zirconium oxide + polyvinylidene fluoride | 13.5 | 7 | 1.35 | 1685 |
| Example 1-15 | Stainless steel foil-1 | 10 | 900 | Polyethylene | 27 | 26 | 2.7 | 1742 |
| Example 1-16 | Stainless steel foil-1 | 10 | 900 | Polyethylene terephthalate | 18 | 35 | 1.8 | 1753 |
| Example 1-17 | Stainless steel foil-1 | 10 | 900 | Polystyrene | 23 | 27 | 2.3 | 1739 |
| Example 1-18 | Stainless steel foil-1 | 10 | 900 | Butadiene styrene rubber | 25 | 30 | 2.5 | 1747 |
| Example 1-19 | Stainless steel foil-1 | 10 | 900 | Silicone rubber | 35 | 21 | 3.5 | 1740 |
| Example 1-20 | Stainless steel foil-1 | 10 | 900 | Polypropylene | 32 | 23 | 3.2 | 1735 |
| Comparative Example 1 | / | / | / | / | / | / | / | 1500 |
| Comparative Example 2 | Stainless steel foil-4 | 20 | 780 | Polypropylene-2 | 12 | 35 | 0.6 | 1510 |
| Comparative Example 3 | Stainless steel foil-1 | 10 | 900 | Polypropylene-7 | 300 | 10 | 30 | 1590 |
| Comparative Example 4 | Stainless steel foil-5 | 7 | 1200 | Polypropylene-1 | 30 | 25 | 4.3 | 1400 |
| Comparative Example 5 | Gold foil | 150 | 100 | Polypropylene-4 | 200 | 17 | 1.3 | 1560 |

| | | | | | | | | |
|---|---|---|---|---|---|---|---|---|
| Note: In Table 1, for the stainless steel foil-1, stainless steel foil-2, stainless steel foil-3, stainless steel foil-4, and stainless steel foil-5, the elongation rate L₂ of the substrate layer was made as shown in Table 1 by adjusting and controlling the annealing temperature and annealing time during the preparation of stainless steel foils; and for the polypropylene-1, polypropylene-2, polypropylene-3, polypropylene-4, polypropylene-5, polypropylene-6, and polypropylene-7, the elongation rate L₁ of the insulation layer was made as shown in Table 1 by adjusting and controlling the molecular weight of polypropylene. "/" in Table 1 means that a corresponding preparation parameter does not exist. | | | | | | | | |

It can be seen from Example 1-1 to Example 1-20 and Comparative Example 1 that, the binding piece provided in this application being applied to the lithium-ion battery can improve the safety performance of the lithium-ion battery. It can be seen from Example 1-1 to Example 1-20 and Comparative Example 2 to Comparative Example 5 that, when the elongation rate L₂ of the substrate layer and the value of L₁/L₂ are within the ranges defined in this application, the lithium-ion battery obtained has better safety performance.

The material, elongation rate Li, and tensile strength of the insulation layer, as well as the material and tensile strength of the substrate layer generally affect the performance of the lithium-ion battery. It can be seen from Example 1-1 to Example 1-8 and Example 1-12 to Example 1-20 that, when the material, elongation rate Li, and tensile strength of the insulation layer, as well as the material and tensile strength of the substrate layer are within the ranges defined in this application, the lithium-ion battery obtained has batter safety performance. The structure of the binding piece generally also affects the performance of the lithium-ion battery. It can be seen from Example 1-1 and Example 1-9 to Example 1-11 that, when the structure of the binding piece is within the range defined in this application, and the binding piece is applied to the lithium-ion battery, the lithium-ion battery obtained has better safety performance.

It can be seen from Example 1-1 and Example 1-12 to Example 1-20 that, when the insulation layer within the range defined in this application is selected, the lithium-ion battery obtained has better safety performance.

**Table 2**

| | Thickness T of insulation layer (µm) | Thickness of substrate layer (µm) | Thickness of binding layer (µm) | Material of binding layer | Peel strength C of binding layer (N/m) | Maximum puncture resistance (N) |
|---|---|---|---|---|---|---|
| Example 1-1 | 5 | 20 | 5 | Methyl methacrylate | 300 | 1700 |
| Example 2-1 | 0.5 | 20 | 5 | Methyl methacrylate | 300 | 1685 |
| Example 2-2 | 25 | 20 | 5 | Methyl methacrylate | 300 | 1740 |
| Example 2-3 | 50 | 20 | 5 | Methyl methacrylate | 300 | 1773 |
| Example 2-4 | 5 | 20 | 0.5 | Methyl methacrylate | 100 | 1703 |
| Example 2-5 | 5 | 20 | 50 | Methyl methacrylate | 800 | 1767 |
| Example 2-6 | 5 | 1 | 5 | Methyl methacrylate | 300 | 1645 |
| Example 2-7 | 5 | 50 | 5 | Methyl methacrylate | 300 | 2570 |
| Example 2-8 | 5 | 20 | 5 | Acrylic acid | 350 | 1713 |
| Example 2-9 | 5 | 20 | 5 | Vulcanized silicone rubber | 260 | 1650 |
| Example 2-10 | 5 | 20 | 5 | Polypropylene | 320 | 1730 |

The thickness of the insulation layer and the thickness of the substrate layer, the thickness and material of the binding layer, and the peel strength C of the binding layer generally affect the performance of the electrochemical apparatus. It can be seen from Example 1-1 and Example 2-1 to Example 2-10 that, when the thickness of the insulation layer and the thickness of the substrate layer, the thickness and material of the binding layer, and the peel strength C of the binding layer are within the ranges defined in this application, the lithium-ion battery obtained has better safety performance.

It should be noted that the lithium-ion batteries in the foregoing Example 1-1 to Example 1-20 and Example 2-1 to Example 2-10 are only examples and impose no limitation on this application. The binding piece provided in this application may be used in any lithium-ion battery and other electrochemical apparatuses.

It should be noted that relational terms such as "first" and "second" are only adopted to distinguish one entity from another entity, and are not necessarily required or implied that there is any such actual relationship or order between these entities. In addition, terms "comprise", "include", or any of their variants are intended to cover a non-exclusive inclusion, such that a process, a method, an article, or a device that includes a series of elements not only includes those elements but also includes other elements that are not expressly listed, or further includes elements inherent to such process, method, article, or device.

The embodiments in this specification are described in a related manner. For a part that is the same or similar between different embodiments, reference may be made between the embodiments. Each embodiment focuses on differences from other embodiments.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A binding piece (30) for electrochemical apparatus, **characterized in that**, the binding piece (30) comprises an insulation layer (32), a substrate layer (33), and at least one binding layer (31) stacked together; wherein one of the at least one binding layer (31) forms on an outer surface of the binding piece (30); wherein 10% ≤ L₂ ≤100%, 1.2 ≤ L₁/L₂ ≤ 20, L₁ is an elongation rate of the insulation layer (32), and L₂ is an elongation rate of the substrate layer (33).

2. The binding piece (30) according to claim 1, **characterized in that**, a tensile strength of the insulation layer (32) is 5 MPa to 100 MPa; and/or
0.5 µm ≤ T ≤50 µm; T is a thickness of the insulation layer (32); and/or
a tensile strength of the substrate layer (33) is 200 MPa to 1500 MPa, and 12% ≤ L₁ ≤200%; and/or
a thickness of the substrate layer (33) is 1 µm to 50 µm.

3. The binding piece (30) according to claim 1, **characterized in that**, the insulation layer (32) satisfies one of the following characteristics:
(i) that the insulation layer (32) comprises inorganic insulation particles and a binder; wherein the inorganic insulation particles comprise at least one of aluminum oxide, titanium dioxide, magnesium oxide, zirconium oxide, or zinc oxide, and the binder comprises at least one of polyvinylidene fluoride, polyacrylate salt, polyacrylic acid, polyacrylate ester, polymethyl methacrylate, polyacrylonitrile, polyamide, or sodium carboxymethyl cellulose;
(ii) that the insulation layer (32) comprises a polymer; wherein the polymer comprises at least one of polypropylene, polyethylene, polyethylene terephthalate, polyvinyl chloride, polyamide, polystyrene, natural rubber, cis-butadiene rubber, neoprene, styrene-butadiene rubber, nitrile rubber, silicone rubber, isoprene rubber, or ethylene-propylene rubber; and
(iii) that the insulation layer (32) is a non-woven fabric; wherein the non-woven fabric is made of at least one of polyethylene, polypropylene, polytetrafluoroethylene, polyethylene terephthalate, cellulose, polyimide, or polyamide.

4. The binding piece (30) according to claim 1, **characterized in that**, the substrate layer (33) is made of at least one of gold, gold alloy, silver, silver alloy, platinum, platinum alloy, copper, copper alloy, magnesium, magnesium alloy, aluminum, aluminum alloy, titanium alloy, nickel, nickel alloy, stainless steel, or another iron alloy.

5. The binding piece (30) according to claim 1, **characterized in that**, 50 N/m ≤ C ≤ 1000 N/m, C is a peel strength of the one of the at least one binding layer (31), and a thickness of the one of the at least one binding layer (31) is 0.5 µm to 50 µm.

6. The binding piece (30) according to claim 1, **characterized in that**, the at least one binding layer (31) comprises at least one of an acrylic compound, an acrylic ester compound, a phosphate ester compound, a polyurethane compound, rosin resin, terpene resin, phenolic resin, petroleum resin, an epoxy resin compound, a vinyl acetate compound, a polyvinyl acetal compound, a polyamide compound, vulcanized silicone rubber, furan resin, a formaldehyde resin compound, a polyimide compound, or urea formaldehyde resin.

7. The binding piece (30) according to claim 1, **characterized in that**, the insulation layer (32) is disposed between the substrate layer (33) and the one of the at least one binding layer (31).

8. The binding piece (30) according to claim 1, **characterized in that**, the insulation layer (32) comprises a first insulation layer (321) and a second insulation layer (322); wherein the one of the at least one binding layer (31), the first insulation layer (321), the substrate layer (33), and the second insulation layer (322) are sequentially stacked.

9. The binding piece (30) according to claim 8, **characterized in that**, the at least one binding layer (31) comprises a first binding layer (311) and a second binding layer (312); wherein the first binding layer (311), the first insulation layer (321), the substrate layer (33), the second insulation layer (322), and the second binding layer (312) are sequentially stacked.

10. The binding piece (30) according to claim 9, **characterized in that**, the at least one binding layer (31) further comprises a third binding layer (313) disposed between the substrate layer (33) and the first insulation layer (321), and a fourth binding layer (314) disposed between the substrate layer (33) and the second insulation layer (322).

11. An electrochemical apparatus, comprising an electrode assembly, a packaging bag (41), and the binding piece (30) according to any one of claims 1 to 10.

12. The electrochemical apparatus according to claim 11, **characterized in that**, the electrode assembly is disposed in the packaging bag (41), the binding piece (30) is disposed between the electrode assembly and the packaging bag (41), and the one of the at least one binding layer (31) is adhered to an outer surface of the electrode assembly.

13. The electrochemical apparatus according to claim 12, **characterized in that**, the electrode assembly is of a winding structure, and the electrode assembly comprises a tab; wherein in a thickness direction of the electrode assembly, the electrode assembly comprises a first surface and a second surface, a distance from the tab to the first surface is H₁, a distance from the tab to the second surface is H₂, H₁/H₂ > 1, and the one of the at least one binding layer (31) is adhered to the first surface.

14. The electrochemical apparatus according to claim 12, **characterized in that**, the electrode assembly comprises a tab and an electrode plate, the electrode plate comprises a connection region, the tab is connected to the electrode plate at the connection region, and an orthographic projection of the binding piece (30) and an orthographic projection of the connection region at least partially overlap in a thickness direction of the electrode assembly.

15. An electronic apparatus, comprising the electrochemical apparatus according to any one of claims 11 to 14.
